(19)

Europäisches
Patentamt
European
Patent Office
Office européen
des brevets

(11) **EP 2 290 912 A1**

(12) **EUROPEAN PATENT APPLICATION**
published in accordance with Art. 153(4) EPC

| | |
|---|---|
| (43) Date of publication:<br>**02.03.2011 Bulletin 2011/09** | (51) Int Cl.:<br>**H04L 29/08** *(2006.01)* |
| (21) Application number: **08874451.1** | (86) International application number:<br>**PCT/CN2008/073616** |
| (22) Date of filing: **19.12.2008** | |
| | (87) International publication number:<br>**WO 2009/143686 (03.12.2009 Gazette 2009/49)** |

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **ZTE Corporation**<br>**Shenzhen, Guangdong 518057 (CN)** |
| | (72) Inventor: **LI, Mujin**<br>**Guangdong 518057 (CN)** |
| (30) Priority: **30.05.2008 CN 200810110325** | (74) Representative: **Bongiovanni, Simone et al**<br>**Studio Torta S.r.l.**<br>**Via Viotti, 9**<br>**10121 Torino (IT)** |

(54) **CONTENT DISTRIBUTING METHOD, SERVICE REDIRECTING METHOD AND SYSTEM, NODE DEVICE**

(57)     A content distributing method, a service redirecting method and system, and a node device, wherein the content distributing method comprises: dividing content to be distributed into multiple segments (S32); determining for each segment one or more nodes for storing the segment (S34); distributing the segment to the one or more nodes for storing the segment (S36). The present invention may respond to requests of users at multiple nodes separately, effectively improve the extensibility of the IPTV (Internet network Television) system, complete the functions such as IPTV media service directing, and effectively overcome the defects that the extensibility of the IPTV system in the prior art is poor and that searches and lookups are not flexible.

```
          ┌─────────┐
          │  start  │
          └────┬────┘
               ▼
   ┌──────────────────────────┐
   │ dividing content to be   │──── S32
   │ distributed into         │
   │ multiple segments        │
   └────────────┬─────────────┘
                ▼
   ┌──────────────────────────┐
   │ determining for each     │──── S34
   │ segment one or more      │
   │ nodes for storing the    │
   │ individual segments      │
   └────────────┬─────────────┘
                ▼
   ┌──────────────────────────┐
   │ distributing the segment │──── S36
   │ to one or more nodes for │
   │ storing the segment      │
   └────────────┬─────────────┘
                ▼
          ┌─────────┐
          │   end   │
          └─────────┘
```

**Figure 3**

EP 2 290 912 A1

**Description**

**Filed of the Invention**

The present invention relates to a technology of distributing and delivering media content in data communication field, and specifically, to a content distributing method, a service redirecting method and system, and a node device.

**Background of the Invention**

With the rapid development of video and broadband access technology, watching TV live broadcast via Internet network has been realized. Internet Protocol Television (IPTV) can provide services such as TV live broadcast, Video On Demand (VoD) and TV On Demand (TVoD). When a user watches television live broadcast, the user can also time-shift and look back the TV program and so on, so that the user can be completely liberated from the traditional mode of passively watching television as "watching what is played".

The current IPTV system is a C/S structure. There are mainly two modes for the IPTV services implemented on a broadband network, i.e., P2P overlay network schemes based on a C/S mode and based on a Peer to Peer (P2P) technology.

The IPTV system based on the C/S structure has poor extensibility, and it is difficult for the system to extend to the situation of a very large number of users (e.g. one hundred thousands of users, millions of users). With the increase of the number of IPTV services required by the users, a server with any capacity will eventually encounter the situation in which the server cannot respond to the request of users in time. The resources of the server will finally be consumed up, and the server cannot provide IPTV services to the users, which becomes the bottleneck of the IPTV system. At present, the methods for reducing the pressure of the server comprises the follows: Multicasting method, Batching technique, Patching technique, Merging technique, Periodic broadcasting technique and so on. These techniques are basically based on Multicasting mode, i.e., combining a plurality of broadcasts on-demand (or live broadcasts) of a single file into a multicast channel service.

At present, as the entire network doesn't support a whole network IP multicast and the line bandwidth of ADSL is not enough for supporting simultaneous transmission of two streams, the above methods of reducing the pressure of the server is difficult to realize in practical operation, and this resource-saving strategy is at the expense of the delay in the response to the users, which gets more kicks than halfpence in commercial operation.

In addition, a method using media fragment may also be used to reduce the pressure of the server, for example: a cooperative proxy caching technique, which may shorten the waiting time of the user before channel switch and program broadcast; a segment-based caching technique, which distributes individual segments of a media file in the manner of cooperation to the user to broadcast, which however fails to improve the extensibility of the IPTV system.

The P2P system allows peer exchange of data between different computers, and each computer running a P2P software is referred to as a peer. Any system with a media service locating function must be able to provide the function of searching and looking up information, and the P2P software can provide this capability of media service locating and searching and looking up the P2P network information. The searching schemes used by the P2P network can generally be divided into two kinds: a structured system and an unstructured network in which search is performed in the manner of flooding.

The unstructured P2P network searching in a manner of flooding may produces a large number of redundant requests and is difficult to extend to a network with a plenty of peers. The structured P2P system uses the searching technology based on Distributed Hash Table (DHT). This searching method closely couples the position of content (or data) with the network topology structure, which will lead to a higher maintenance cost, and this network only supports ID searching and looking up and lacks the flexibility of searching and looking up based on key words.

It can be seen that, in the current IPTV system, the C/S mode-based structure has poor extensibility; the unstructured P2P network searching in a manner of flooding has poor extensibility, and the structured P2P system has a high maintenance cost and is not flexible in searching.

**Summary of the Invention**

In view of the defects that, in the prior art, the extensibility of the IPTV system is poor, and the searches and lookups are not flexible, the present invention aims to provide a content distributing method, a service redirecting method, apparatus and system, so as to improve the extensibility of the IPTV system.

To achieve the above object, a content distributing method is provided according to one aspect of the present invention.

The content distributing method according to an embodiment of the present invention comprises: dividing content to be distributed into multiple segments; determining for each segment one or more nodes for storing the segment;

distributing the segment to the one or more nodes for storing the segment.

Wherein the operation of dividing content to be distributed into multiple segments particularly comprises: dividing the content to be distributed into multiple identical or different segments with each segment containing multiple blocks whose size is adjustable and/or configurable.

Wherein the one or more nodes for storing the segment are determined by at least one of the following node information: available bandwidth of the node, stability of the node, available storage space of the node, and utilization frequency of the node.

Preferably, the method further comprises: periodically acquiring a report message transmitted by a node, with the report message carrying the node information.

Wherein the nodes for storing the segment may be determined according to the following information:

$$\mathbf{G}^{St}_{i} = \alpha_{St} \times \frac{EstimatedStay_i(new)}{\max_{1 \le i \le m}\{EstimatedStay_i(new)\}} + \beta_{St} \times \frac{Bw_i \times (1 - R_i^{usage})}{\max_{1 \le i \le m}\{Bw_i \times (1 - R_i^{usage})\}} -$$

$$\gamma_{St} \times \frac{Freq_i^{serve}}{\max_{1 \le i \le m}\{Freq_i^{serve}\}} ,$$

wherein, $G^{st}_i$, represents a goodness measure of node i,

$$EstimatedStay_i(new) = \alpha \times EstimatedStay_i(prev) + \beta \times CurrentStay_i;$$

$EstimatedStay_i(new)$ represents stability of the node, $CurrentStay_i$ is a time-period length of a non-barrier duration or a duration of the node i participating in the system, $EstimatedStay_i(prev)$ is a historical value of $EstimatedStay_i$, $\alpha$ and $\beta$ are weight factors, and $\alpha + \beta = 1$; $Bw_i$ is the available bandwidth for the node i; $R_i^{usage}$ is an average utilization of a bandwidth donated by the node i participating in the system, $Fre^{serve}_i$ is frequency at which the node i processes IPTV requests within a predetermined period;

wherein $\alpha_{St}$, $\beta_{St}$, $\gamma_{St}$ are weight factors, and m is the number of nodes participating in the IPTV system.

Wherein the operation for determining one or more nodes for storing the segment particularly comprises: obtaining a goodness measure $G^{st}_i$ corresponding to each node; and selecting goodness measures which are greater than or not less than a preset value, and setting nodes corresponding to the goodness measures which are greater than the preset value as the nodes for storing the segment.

Preferably, the operation of distributing the segment to the one or more nodes for storing the segment is performed in the following way: distributing the segment to one or more nodes respectively, according to the goodness measures of one or more nodes determined for storing the segment.

To achieve the above object, a service redirecting method is provided according to one aspect of the present invention.

The service redirecting method according to an embodiment of the present invention comprises: acquiring a content request message, wherein the content request message is used to request downloading/pulling down content; determining one or more nodes for storing individual segments of the content; downloading/pulling down individual segments of the content from the one or more nodes; and obtaining complete content according to the individual segments of the content.

Preferably, after the operation of determining one or more nodes for storing individual segments of the content, the following step is further comprised: adding node identifiers of the determined one or more nodes to a node list downloading/pulling down the content.

Preferably, after the operation of determining one or more nodes for storing individual segments of the content, the following is further comprised: assigning downloading/pulling-down data blocks to the one or more nodes, which can be particularly performed through at least one of the following manners: according to the order of the nodes, downloading/pulling down the segments or one/more blocks in the segment from the one or more nodes in the 'round robin', wherein the segments or the blocks assigned to each node in each cycle are identical, or the segments or the blocks assigned are in proportion to the bandwidth of the node; downloading/pulling down each of the segments or one/more blocks in the segments from the one or more nodes, according to the bandwidth of the one or more nodes for storing the segment.

Wherein the operation of downloading/pulling down individual segments of the content from the one or more nodes is carried out via at least one of the following manners: downloading/pulling down individual segments of the content by accumulating the bandwidth; writing into a preset circular cache the individual segments of the content downloaded/pulled down with the circular cache preset with corresponding locations of the individual segments and/or one or more blocks of the individual segments, wherein the each segment contains multiple blocks whose size is adjustable and/or configurable.

Preferably, the method further comprises: selecting alternative nodes for one or more failure nodes whose receiving rate is less than a preset value, and downloading/pulling down from the alternative nodes the segments and/or blocks stored in corresponding failure nodes.

To achieve the above object, a service redirecting system is provided according to another aspect of the present invention.

The service redirecting system according to an embodiment of the present invention comprises one or more clusters, wherein each cluster includes: a central node, configured to store all content to be distributed, and to distribute the content; one or more subordinate nodes with a hierarchical structure, directly connected to the central node or connected to an upper-level node of the subordinate node, configured to store individual segments of the content distributed by the system, to determine one or more nodes of a downloaded/pulled-down content upon receiving a request message corresponding to downloaded/pulled-down content, and to download/pull down the individual segments of the content from the one or more nodes determined.

Preferably, the central node and the subordinate nodes form a tree-type topology structure or a netty topology structure.

Wherein the above each of the nodes comprises: a category table, configured to store a mapping relation between individual categories and agent nodes of a cluster to which the category pertains, wherein the category is directory information which classifies all the content, and the agent nodes are used to maintain and manage nodes containing one or more kinds of directory content in the categories; a storage module, configured to store segments of the content locally stored; and a link module, configured to store links to other nodes.

Preferably, when the above nodes are agent nodes, the system further comprises: a content index table, configured to maintain nodes for storing content, and address information corresponding to the nodes; an overlay link table, configured to store address information of one or more agent nodes having an identical category in other clusters, wherein the category is directory information which classifies all the content.

To achieve the above object, a node device is provided according another aspect of the present invention.

The node device according to an embodiment of the present invention comprises: a category table, configured to store a mapping relation between the individual categories and agent nodes of a cluster to which the category pertains, wherein the category is directory information which classifies all the content, and the agent nodes are used to maintain and manage nodes containing one or more kinds of directory content in the categories; a storage module, configured to store segments of the content locally stored; and a link module, configured to store links to other nodes.

Preferably, the node device further comprises: a content index table, configured to maintain nodes for storing content, and address information corresponding to the nodes; an overlay link table, configured to store address information of one or more agent nodes having an identical category in other clusters, wherein the category is directory information which classifies all the content.

Wherein the above link module comprises: a parent link sub module, configured to store a link to an upper-level node; and a sub link sub module, configured to store a link to a lower-level node.

The content distributing method, service redirecting method, node device and system in each of the embodiments of the present invention may distribute content on a large scale and perform media service location on the internet. In the above one or more embodiments, for the IPTV system, the content is divided into multiple different segments, these segments may be stored in multiple nodes of the system. Segments of hot (i.e., content the users click more frequently) programs (or very important segments) may be stored in multiple different nodes, and when the users request to watch the corresponding programs, it is not necessary to complete the download of all the segments requested before media playing. The segment of a video file may be further divided into multiple blocks, which helps to parallelly receive different parts of a segment from different storage nodes, so as to accumulate the up-link bandwidths from different storage nodes. During a stream media session, multiple storage nodes support one IPTV request, and are able to use some available storage space and up-link bandwidth to a user terminal to support the IPTV service request.

In the above one or more embodiments, the content is divided into several segments, and is distributed to multiple different storage nodes, which is different from the existing technology that the whole content or file is taken as a unit and stored in a certain server node, can respond to requests of the users at multiple nodes separately, effectively improve the extensibility of the IPTV system, and complete the functions such as the IPTV media service direction.

Other characteristics and advantages of the present invention will be explained in the following description, and moreover, partly obvious from the description, or understood by carrying out the present invention. The object and other advantages of the present invention can be realized and obtained through the structure particularly mentioned in the written description, the claims, and the accompanying drawings.

**Brief Description of the Accompanying Drawings**

The drawings herein are used to provide a further understanding of the present invention and form a part of the specification, which are used to explain the present invention together with the embodiments of the present invention without unduly limiting the scope of the present invention. In the accompanying drawings:

Figure 1 is a schematic diagram of an IPTV system for realizing a P2P technology by using a service redirecting system according to an embodiment of the present invention;

Figure 2 is a structural schematic diagram of each node in Figure 1;

Figure 3 is a flow chart of the content distributing method according to an embodiment of the present invention;

Figure 3A is a schematic diagram of an embodiment of dividing the content into segments in Step 32 in Figure 3;

Figure 4 is a schematic diagram of a tree structure cluster formed by a system according to an embodiment of the present invention;

Figure 5 is a schematic diagram of an internal structure of a system and each node devices according to an embodiment of the present invention;

Figure 6 is a schematic diagram that the system according to an embodiment of the present invention is applied to the IPTV system of P2P technology to realize category overlay of the content searched and looked up;

Figure 7 is a flow chart of a method according to an embodiment of the present invention;

Figure 7A is a schematic diagram of a distributing order for using a method according to an embodiment of the present invention to realize downloading/pulling down data blocks based on around robin method;

Figure 7B is a schematic diagram of a distributing order for using a method according to an embodiment of the present invention to realize downloading/pulling down data blocks based on bandwidth;

Figure 7C is a schematic diagram of a distributing order for using a method according to an embodiment of the present invention to realize downloading/pulling down data blocks based on a multi-source method;

Figure 8 is a schematic diagram of using a method according to an embodiment of the present invention to realize a transmission of data to users using accumulated bandwidth;

Figure 9 is a schematic diagram of using a method according to an embodiment of the present invention to realize a transmission of data blocks to users using a round robin method;

Figure 10 is a schematic diagram of an extended structure of an IPTV system applying a system according to an embodiment of the present invention to P2P technology.

**Detailed Description of the Preferred Embodiments**

Function Overview

As mentioned above, based on the fact that the current IPTV system is based on the C/S mode, its extensibility is poor and the maintenance cost of the unstructured P2P network which performs search through a flooding mode is high, the embodiments of the present invention provide a scheme for distributing content applicable to the IPTV system, which can respond to the requests of the users at multiple nodes respectively, and complete the functions such as the IPTV media service direction, by dividing the content to be distributed into multiple segments;, determining for each segment thereof one or more nodes for storing the segment; and distributing the segment to the one or more nodes for storing the segment, which is different from the existing technology in which the whole content or file, as a unit, is stored in a certain server node,

The preferred embodiments of the present invention are described in conjunction with the drawings herein as follows. It shall be understood that the preferred embodiments described herein are only used to describe and explain the present invention without unduly limiting the present invention.

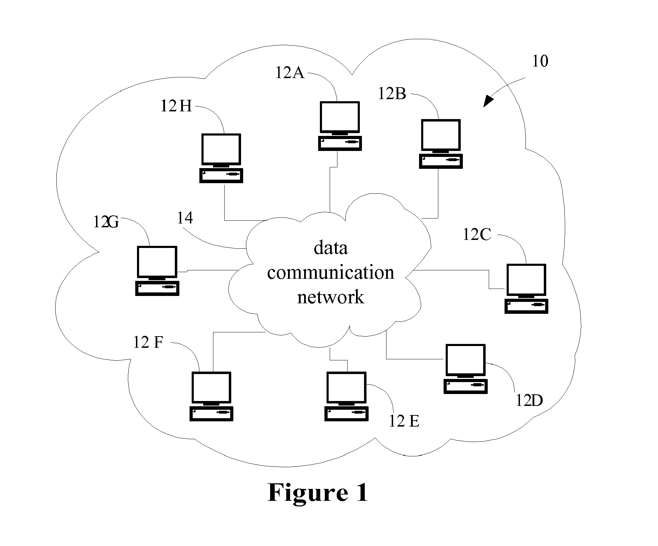

According to the embodiments of the present invention, a service redirecting system, a content distributing method, a service redirecting method and a service redirecting apparatus are provided. Each of the embodiments of the present invention will be described in detail in conjunction with Figure 1- Figure 10.

System embodiment

According to an embodiment of the present invention, an IPTV system is provided.

Figure 1 is a schematic diagram of an IPTV system for realizing a P2P technology by using a system for redirecting service according to an embodiment of the present invention. Figure 1 shows an IPTV system 10 based on P2P. The system 10 includes a number of nodes, such as nodes **12A-12H** in Figure 1, wherein each node is an apparatus with calculation ability and data storage ability. For example, the nodes **12A-12H** may be a PC, a work station, a Set-Top-Box (STB), a stream media server, other network device, and so on. The nodes **12A-12H** are interconnected through a data communication network 14, and the nodes **12A-12H** can exchange information and content through the network 14. Figure 1 only shows eight nodes, but the number of the nodes is not limited to eight, and the system 10 may include more nodes.

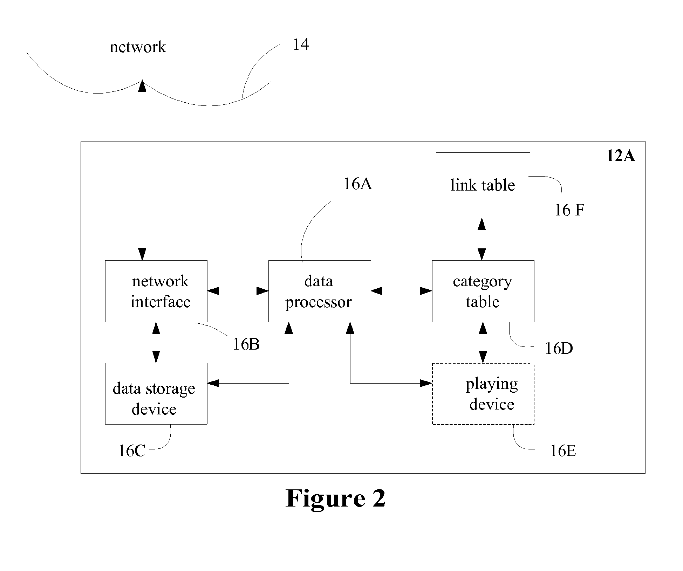

Figure 2 is a structural schematic diagram of each node in Figure 1. As shown in Figure 2, taking the node 12A as an example, the node contains a data processor 16A, a network interface 16B, a data storage device 16C, a category table 16D, and a playing device 16E, wherein the data processor 16A executes the category table 16D, and obtains node address information of a corresponding category, with the particular processing procedure to be described in detail hereinafter. The data storage device 16C may store segments distributed by the system; and the node stores routing relations between this node and other nodes in the link table 16D, wherein part of or all of each of the nodes in the system in Figure 1 may have a playing device 16E.

The IPTV content cannot be used by the system 10 until it is distributed to the system 10. Those skilled in the art should understand that the content or the media content in each embodiment of the present invention may be any kind of data. For example, applied in the IPTV system, the media content may be one of the following or the combination thereof:

1. video content (for example, films, television programs, television live broadcast, and so on);

2. audio content (for example, music, and so on);

3. media content of other types.

Method Embodiment

According to an embodiment of the present invention, a method for distributing content is provided.

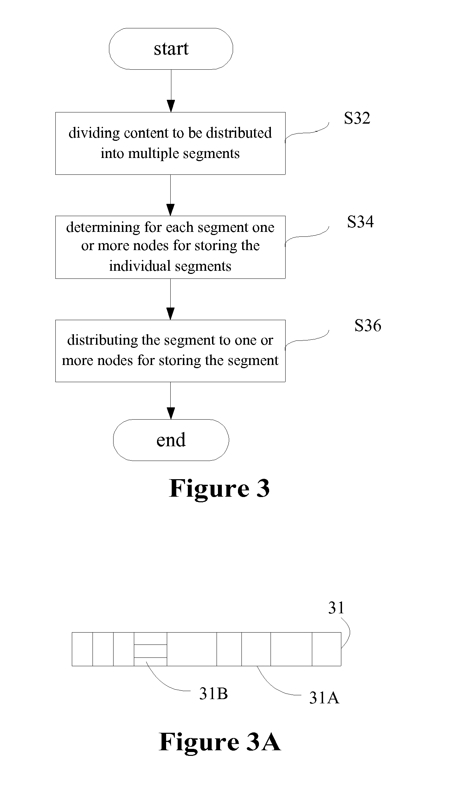

Figure 3 is a flow chart of a content distributing method according to an embodiment of the present invention. As shown in Figure 3, the present embodiment includes the following processes (Step S32 to Step S36).

Step S32: dividing content to be distributed into multiple segments;

Step S34: determining for each segment one or more nodes for storing the individual segments;

Step S36: distributing the segment to one or more nodes for storing the segment.

Wherein the above Step S32 may refer to Figure 3A. Figure 3A is a schematic diagram of an embodiment of dividing the content into segments in Step 32 in Figure 3. As shown in Figure 3A, the content to be distributed is provided in the form of file 31. Step 32 may divide the file 31 into several segments 31A (or fragment) through a fragmentation processor, wherein the segments may have an equal size or unequal size. Each segment 31A may also contain several blocks 31B, the size of which is adjustable or configurable.

In Step S34, one or more nodes (such as several nodes of the nodes 12A-12H in Figure 1) are selected for storing every segment 31A. By performing Step S36, the system may distribute individual segments of the content to the different nodes selected, wherein the different nodes may receive one or more segments.

With the content distributing method of the present embodiment, all the segments 31A of the media file 31 are stored in the nodes of the system. Preferably, each of the segments 31A is stored in multiple nodes of the system.

The process of the embodiment of the content distributing method in Figure 3 is described in detail in conjunction with the system shown in Figure 1.

The nodes **12A-12H** in the system 10 may donate some out-of-band bandwidth and file storage space for the system 10 to realize the distribution of the content in the system 10. Assuming that the out-of-band bandwidth and the file storage space donated by the ith node Pi are Bwi and Sti respectively, determining which node stores the segments 31A of the current media file may be based on many factors. For example, determining one or more nodes for storing the segments 31A may be based on the following one or more factors: an available bandwidth Bwi of the nodes, an available storage space Sti of the node, the stability of the node, and a degree at which the system uses the node recently, i.e., the utilization frequency of the node.

The possibility that a node is selected to store a certain segment 31A increases with the increase of the available bandwidth and the storage space of the node and the stability of the node, and decreases with the increase of the degree at which the node is used by the system 10. That is, the possibility that a node is determined to store the segment 31A is in a direct proportion to the available bandwidth, storage space of the node and the stability of the node, and in an inverse proportion to the utilization frequency of the node.

As the available bandwidth Bwi of the node and the available storage space Sti of the node may be obtained easily, the other two factors for determining the node for storing segment 31A is briefly introduced as follows:

1. The measurement of the stability of the node

One possible measurement of the stability of the node i is: based on the length of the period, during the period, the node (such as any node of the nodes **12A-12H** in Figure 1) is kept in connection with the system 10 without interruption or offline. Preferably, the stability of each node may be calculated through the following Formula (1):

$$\text{EstimatedStayi(new)} = \alpha \times \text{EstimatedStayi(prev)} + \beta \times \text{CurrentStayi} \qquad (1)$$

wherein CurrentStayi represents a time length of the duration or the non-barrier duration of the node i in the system 10 when the node i is connected to the system 10; EstimatedStayi(new) is a measurement of the stability of the node Pi, considering the historical data of the node i, EstimatedStayi(prev) is a historical value of EstimatedStayi, $\alpha$ and ($\beta$ are weights, and $\alpha+\beta=1$.

2. The utilization frequency of the node

The degree at which the node i is used by the system recently may be measured according to the following two parameters: an average utilization rate $R_i^{usage}$ of the bandwidth donated by the node i since the node i participates in the system, a frequency $Fre^{serve}_i$ at which the node processes the IPTV requests in the recent period.

After the available bandwidth Bwi, the available storage space Sti, the stability and the utilization frequency of each node in the system are obtained, one or more nodes for storing the segments of the content (file) may be determined.

Preferably, the possibility that the node i is selected to store the segment 31A of the media file 31 may be based on measuring $G^{st}_i$ the $G^{st}$ value is referred to as a "goodness measure" hereinafter. For example, for a certain specific implementation, the formula for calculating $G^{st}_i$ is shown as follows:

$$\mathbf{G}^{\mathbf{St}}_i = \alpha_{st} \times \frac{\text{EstimatedStay}_i}{\max\limits_{1 \le i \le m}\{\text{EstimatedStay}_i\}} + \beta_{st} \times \frac{Bw_i \times (1 - R_i^{usage})}{\max\limits_{1 \le i \le m}\{Bw_i \times (1 - R_i^{usage})\}} - \gamma_{st} \times$$

$$\frac{Freq_i^{serve}}{\max\limits_{1 \le i \le m}\{Freq_i^{serve}\}} \qquad (2)$$

wherein $\alpha_{st}, \beta_{st}, \gamma_{st}$ are weight factors, m is the number of the nodes participating in the system.

From the goodness measure of the above formula, it can be known that, a node which is more stable, has a higher available bandwidth and a shorter history of being used will have a higher $G^{st}$ value, and the node with a higher $G^{st}$ value can be taken as a candidate node for storing each segment 31A of the file.

The node with the content to be distributed, for example, the node which expects to distribute the file **31,** searches the $G^{St}$ values of other nodes and determines other nodes (one or more) with a higher $G^{St}$ values, and distributes the segment **31A** on these determined nodes. In the specific implementation, a central node or a regional central node may be set in the system shown in Figure 1, and is used to be responsible for maintaining and managing the other multiple nodes which are closest to the (regional) central node, the other multiple nodes except the central node collect and calculate the $G^{St}$ value of themselves, and forward these $G^{St}$ values calculated to the (regional) central node. The (regional) central node maintains a data structure, and associates each node with the corresponding $G^{St}$ value, wherein the data structure may include a list classifying according to the $G^{St}$ values. Once the (regional) central node receives a request from a content distributing node, e.g., node j, the (regional) central node may select node Nc with the highest $G^{St}$ value, and send back information of the determined node Nc to the node j which is to distribute content.

Preferably, the nodes **12A-12H** of the system 10 are organized into one or more cluster structures. Each cluster contains a central node which is used to be responsible for accumulating the $G^{St}$ values of the corresponding nodes in the cluster managed by this central node. In this case, the central node of each cluster, besides determining the node having the highest $G^{st}$ value in its own cluster, may also forward the requests in the present cluster to other central nodes. The request node to distribute content, for example, node j, can receive the information of the determined node Nc sent by the central node after waiting for a period of time (it is allowed to set the longest waiting time), the node j may distribute the segment **31A** to the determined nodes based on an order of the $G^{St}$ value of the determined nodes.

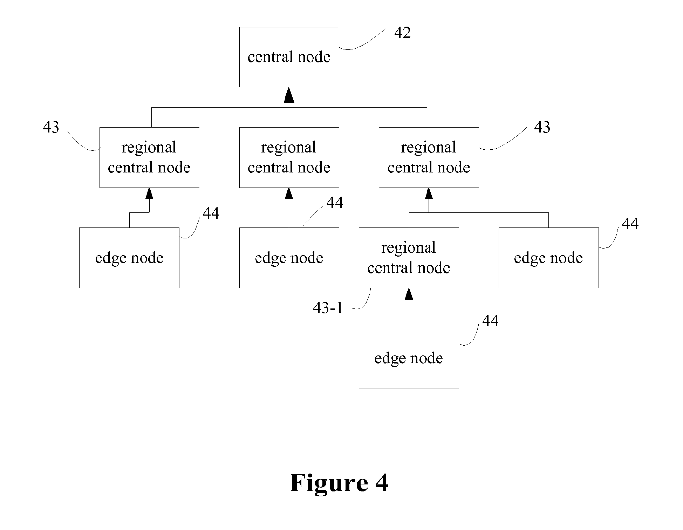

Preferably, a specific implementation situation of the cluster structure is a tree structure, as shown in Figure 4.

Preferably, each node periodically transmits a "heartbeat" message (i.e., a report message) to its upper-level node (shortened as a parent node hereinafter). Wherein the heartbeat message may include at least one of the following: EstimatedStay, Bw, $R^{usage}$ and $Freq^{serve}$. The parent node collects information including a heartbeat message of a lower-level node and the "heartbeat" message of its own, and periodically sends an accumulation report to its own parent node. By the above method, finally, the central node will have recent or latest information sufficient for calculating the $G^{St}$ value of each node, the central node may classify the nodes in a manner of a $G^{St}$ descending order and/or store results in the manner of a classified candidate node list, and the central node maintains the classified candidate node list based on the recent information of the nodes.

In addition to maintaining the $G^{st}$ values of the nodes, if the heartbeat message of a certain node is not received within predetermined time, it may be tested whether the node has left the system for a certain reason.

As shown in Figure 3 and Figure 3A, after the nodes (shortened as storage nodes hereinafter) for storing the segments of the content to be distributed are determined in Step S34, each segment **31A** is circularly distributed between these storage nodes. Wherein the method for distributing the segments is: assigning an initial segment to the candidate node with the highest $G^{st}$ value, and then, distributing the second segment to the candidate node with the second highest $G^{st}$ value, and so on in a similar fashion. When the allocation of all the segments is completed, the node to distribute content sends the segment 31A to each allocated node, and the node stores the received segment 31A in the data storage device **16C.**

Preferably, considering that, after a user watches the initial segment, the user will not continue to watch the following segments of the content if the user is not interested in the content watched; and that, on the other hand, if the user has no time to continue watching the content after watching the initial several segments, the user will not watch the content of the following segments, either, the number of copies of the initial segment or the initial several segments of the content (or referred to as file) to be distributed which is stored in the system needs to be greater than the number of copies of the following segments of the content, that is, multiple storage nodes are selected to store the initial segment or the initial several segments of the file.

According to the method embodiment of Figure 3, the content to be distributed may be divided into multiple segments (such as the segments 31A in Figure 3A), and each segment is stored in one or more nodes in the system. The above embodiment provides a Media Segment Distributing (MSD) method which can make a selection of storing which segments in which nodes according by combining information such as the stability of the node, the available uplink bandwidth, and the recent stream service load/frequency, and can distribute each segment of the file to different nodes to store.

The content distributing method is summarized briefly hereinafter according to Figure 1-Figure 3:

As shown in Figure1-Figure3, when the user searches and obtains the file 31 using the system 10 and plays the file in the node **12A,** the data processor **16A** can enable some segments 31A of the media file 31 to be stored in the data storage device **16C.** These stored segments may be used and downloaded by other nodes in the system 10, especially the segments of the content of some hot programs (such as the files the users click more frequently) need to be stored in the system 10, considering the factor of users' watching in practice, the initial several segments 31A of the media content are more likely to be select to store in the system 10 than the following segments of the content.

In some cases, all the segments of the content of a file are stored in the data storage device **16C** for at least some time. The segments stored in a local storage device **16C** are allowed to be quickly forwarded or played back, as long as the segments are stored in reception nodes, the content (such as video) can be played at the reception nodes, it is not necessary to download the segments, each of the nodes may be configured with a time length during which the program is allowed to be played back.

In some cases, the complete copy (including all the segments of the file) of the content file 31 can be stored in the selected nodes (for example, the nodes which are always on line) which are very stable. Only when none of the other nodes has the content requested by the user, the request of the user is redirected to this kind of nodes (such as the central node 42 in Figure 4), which ensures the existence of "seed" of the program content.

Figure 4 is a schematic diagram of a tree structure cluster formed by a service redirecting system according to an embodiment of the present invention. As shown in Figure 4, except the central node, the other nodes are either directly connected to the central node, or connected to the central node through intermediate nodes. In Figure 4, the cluster only contains one central node 42, the multiple nodes directly connected to the central node are referred to as regional central nodes 43, the lowest-level nodes are referred to as edge nodes 44 which are closest to the users, wherein the regional central nodes 43 are the upper-level nodes or the parent nodes of the edge nodes 44. In the present embodiment, the organization structure of the cluster is in logic, and only relates to routing, according to the routing, the edge nodes and the central nodes may communicate with each other. The arrangement of each node in the cluster is not necessarily affected by the network structure or the geographical location of the nodes.

In the embodiment of Figure 4, the central node 42 is used to store all the content to be distributed and to distribute the content, which may refer to the description concerning content distribution in the method embodiment in Figure 3 and Figure 3A in particular; the regional central node 43 is used to maintain and manage information (such as the heartbeat massages reported by the edge nodes) of the regional central node 43 and of each edge node 44 in the region, to store the content distributed by the central node, and to store the corresponding relation (e.g. a content index table through which the node storing a certain content may be searched) between each edge node 44 and the content stored therein, i.e., although the regional central node may not store data of the segments of some content, the node storing a certain content can be obtained by looking up the corresponding relation between the content and the edge node; the edge node 44 is used to periodically report information of itself, to store content distributed to it, and to notify the regional central node when some program content is not stored locally, and if the regional central node has found the storage node of the program content, to notify the user to download data content from the node searched. Wherein the regional central node 43 may also include a lower-level regional central node 43-1, and forms a hierarchical structure.

Specifically, the service redirecting system may differently restrict the structure and the scale of the cluster in different way. For example, all the nodes belonging to a certain cluster are required to be N levels or N hops at most, and the N levels or the N hops are referred to as the restriction on the scope or the size of the cluster. The number of the levels from one node to the central node through the tree structure is referred to as the scope of the node.

In a specific implementation process, a cluster may be formed through the following two different modes:

1. The cluster is formed by allowing a node's request of participating in an existing cluster

For example, an on-line node i can communicate with a node j of a cluster to request to participate in the cluster, if the scope of the node j is smaller than the scope of the cluster (for example, not reaching the N levels), the node i may be requested to participate in the cluster to which the node j belongs and acts as a sub node of the node j.

2. The cluster is formed by creating a new cluster

For example, the node i requests to participate in the cluster to which the node j belongs, if the scope of the node j equals to the scope of the cluster (for example, reaching the N levels), the request node i may create a new cluster (for example, this node becomes the central node of the cluster newly created).

Preferably, different clusters have identical or similar sizes, and the size may be managed, which can be specifically controlled through the following manners:

(1) Different clusters may have different scopes of cluster, and once a cluster reaches the scope of cluster, it can refuse the request of a node participating in the cluster (until one or more existing nodes which belong to the cluster leave the cluster);

(2) A "branch" utmost limit of a cluster is set, when one node sends a request for participating in a cluster to a boundary node (i.e., the number of the levels of which equals to the utmost limit value of the number of the levels of the cluster) of the cluster, if it is not necessary to create a new cluster, the boundary node may forward the request to its parent node, if the scope of the cluster branch is smaller than the cluster "branch" utmost limit, the node sending the request may participate in the cluster and becomes one branch under the cluster, the higher the utmost limit value of the cluster "branch" is set, the less the clusters which need to be created are, each cluster may have multiple branches, through the cluster "branch" utmost limit, the probability that a request node participates in an existing cluster will be increased, which may reduce the probability of producing clusters with small scopes;

(3) In order to become a central node, some functions which a central node must possess shall be satisfied, for example, having sufficient calculating ability, high bandwidth, longer on-line time and so on;

(4) The central node of every cluster needs to periodically check the scale of the cluster, if the scale (the scope of the cluster/the branches of the cluster) of the cluster is smaller than a certain threshold value, the central node may try to find another suitable cluster, and incorporate it to the suitable cluster.

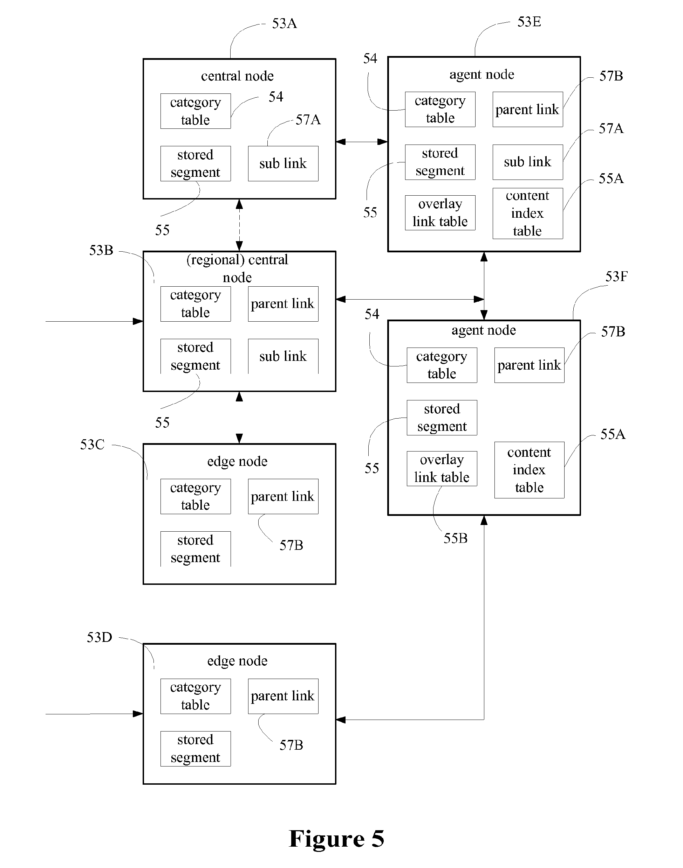

Figure 5 is a schematic diagram of an internal structure of the service redirecting system and each node apparatus according to an embodiment of the present invention. Figure 5 specifies the internal structure of each node in Figure 4. As shown in Figure 5, the nodes to be assigned to maintain and manage indexes of category content defined in advance are referred to as "Agent Nodes" of a certain category. The category relates to the network content, and may be included but not limited to a category describing media. For example, the categories of the films stored by the system are divided into "action", "comedy", "historical" and so on.

In the system shown in Figure 5, after the system receives a request message sent by the user, the nodes which have stored a certain segment of the file of the content requested in the system are expected to be determined, and the stored segment 55 is used to store those segments of the category content locally stored in the node. For example, the categories $1^{th}$ $2^{th}$ ... may be created for each segment of a certain file content in turn, to represent each segment of the file. In the system shown in Figure 5, after the system receives a messages of requiring to download a certain file sent by the user, the system firstly searches nodes including the first segment data of the file, and checks whether the stored segment 55 of each node contains the $1^{th}$ of the file, and then, downloads the data from the nodes searched, and further downloads the second segment data of the file from the searched node containing the $2^{th}$ of the file, and so on. In addition to according to the order of the segments, the categories may also be based on a coefficient factor, for example, the categories may be based on two factors: a subject classification of the content and an order of the segments.

The agent nodes may be classified according to the categories, for example, the agent node of each category maintains a keyword list (shortened as a "content index table" hereinafter) for some or all of the information belonging to the category or allocated to the category. The content index list includes a data structure belonging to a list of all the content keywords of a certain category. For example, in the content index table, each entity includes the following information: a category, a keyword list, a node. Wherein, the "category" represents a category to which the content has been distributed; the "keyword list" includes one or more keywords matching with the content; the "node" indicates that the information is stored in the node. For example, an entity <CA, KL, Nx> indicates that the node Nx includes the content which belongs to the category CA and matches with the keyword KL, specifically, it may be that the node Nx includes the content which belongs to category "action" and matches with "hero". The content index table is only maintained in the agent node.

The service redirecting system in Figure 5 shows a cluster structure, and the cluster has a central node **53A,** a regional central node **53B,** two edge nodes **53C** and **53D,** two agent nodes **53E** and **53F,** wherein each node contains a category table **54** and a locally stored segment **55,** the category table **54** is used to store a mapping table between each category and agent nodes of the cluster to which the category belongs. Each entity in the category table may include the following data: <category, agent node, timestamp>, for example, an entity <CA, Nx, Ti> indicates that, at the moment Ti, the agent node Nx is associated with the category CA. Through the category table 54, the node may locate the agent node of the category corresponding to the content to be inquired.

In the cluster topology shown in Figure 5, all the other nodes which contain sub nodes (lower-level nodes) contain a link **57A** to their sub nodes, all the other nodes except the central node **53A** contain a link **57B** to its parent node (upper-level node). Each agent node **53E** and **53F** include one or more content index tables **59A** and one or more overlay link tables **59B,** wherein the overlay link table **59B** indicates address information of one or more agent nodes which have identical categories in other clusters.

The category overlay related to the overlay link table is introduced hereinafter.

In some cases, the nodes in the P2P network may be divided into cluster structures. Every cluster may include one, two or more nodes. Different clusters may include different numbers of nodes. Each cluster includes several agent nodes maintaining different categories. A single node may be the agent node of multiple categories. The agent nodes of categories which belong to different clusters may be associated with each other, and the association relation may be formed by the links between the agent nodes of different clusters. A link includes an address record or other contact information of the agent nodes of the category maintained by other nodes. In some specific cases, each agent node contains an overlay link list which lists multiple address information of the agent nodes of the category in other clusters. This association between the agent nodes of different clusters is referred to as "category overlay". The overlay of multiple categories may be constructed, and each category overlay is corresponding to a category. Since different clusters may include different numbers of the nodes, a certain node may belong to multiple category overlays.

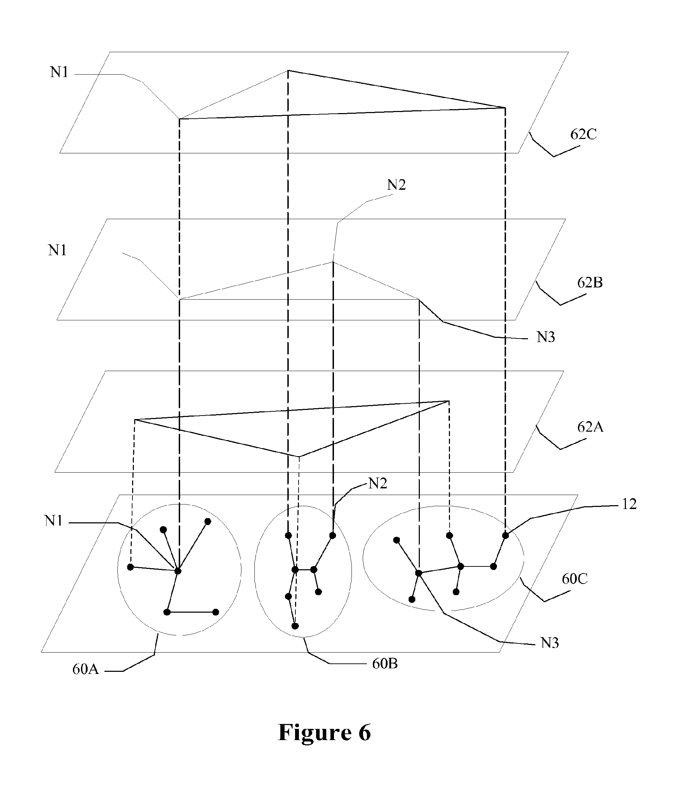

Figure 6 is a schematic diagram of a service redirecting system according to an embodiment of the present invention, and the system is applied to the IPTV system of the P2P technology to realize category overlay of the content searched and looked up. Figure 6 shows an example in which the nodes are organized into a cluster **60A,** a cluster **60B,** and a cluster **60C,** and multiple category overlays **62A, 62B,** and **62C.** In each cluster, an agent node is allocated to one of the three defined categories: Ca1, Ca2, and Ca3. For example, in the cluster **60A,** the agent node N1 is associated with the category Ca2; in the cluster **60B,** the agent node N2 is associated with the category Ca2; in the cluster **60C,** the agent node N3 is associated with the category Ca2. Since the nodes N1, N2, N3 are all the agent nodes of the category Ca2, these three agent nodes may associate with each other to form the category overlay **62B.** Similarly, the category overlays **62A** and **62C** may be formed for the agent nodes of the categories Ca1 and Ca3, respectively.

In the embodiment of Figure 5, the parent nodes and the sub nodes form a topology of the cluster, and the overlay link table **59B** forms a topology of the category overlay, i.e., the topology between different clusters. In order to query information from the system, the node may send a request message for querying a certain content, the request includes the category to be queried, and the keyword list associated with the information to be searched from the system. Through querying the categories in the category table **54** stored locally, the node (i.e., a request node) sending a query request may locate the agent nodes associated with the categories, and sends the request message to the agent nodes associated with the categories. The agent nodes receive the query request, query information which matches with the keywords in the keyword list from the content index table of the agent nodes, and send the queried result, i.e., information of the node in which the keyword content is stored, to the request node.

Preferably, the agent nodes receiving the query request may query information matching with the querying keyword in its content index table **59A,** and return the query results to the request node. The query results may include a node list in which information which satisfies query conditions is stored.

The detailed processing procedure of searching KL information belonging to the category CA is explained with examples on conjunction with Figure 5 and Figure 6 hereinafter:

1. The request node Nx (such as the edge node **53A** in Figure 5) finds the agent node of the category CA by searching its category table;

2. Assuming that the agent node of the category CA is Ny (such as the agent node 53E in Figure 5), the Node Nx establishes communication with the node Ny, and initiates a request message for querying KL belonging to the category CA;

3. If the node Ny is on line (or alive) and is a correct node of the category CA, the node Ny searches its content index table through the keyword KL in the request message received from the Nx, and returns the searching result to the node Nx;

4. If the node Ny is not the correct agent node, the Ny returns a correct address of the agent node (such as the agent node **53F** in Figure 5) according to the category table maintained by the Ny, if the category table information of the Ny is newer than the category table information of the Nx, the Nx updates its category table, and Step 4 is repeated;

5. If the node Ny is off-line or malfunctions, the Nx contacts its parent node Nz; if the Nz cannot find the agent node of the category CA, the Nx contacts the parent node of the Nz until the Nx gets in touch with the central node; if the central node cannot determine the agent node of the category CA yet or the central node is off-line, the every node in the cluster will be queried in the manner of flooding to determine the node containing KL belonging to the category CA.

During the operation of the above Steps 1-5, once the agent node of the category CA receives the query request message, the agent node carries out query locally, looks for the agent node of the category CA in another cluster according to the overlay link list, and forwards the query request to the agent node of corresponding category overlay contained in the overlay link list. When another agent node receives the forwarded query, it checks and determines whether it is the first time to receive the query, if it is the first time to receive the query, a local query is performed; otherwise, the query request may be neglected, specifically, it can be realized through DHT.

In the above searching process, a query request only needs to be transmitted in the category overlay related to the query, which is more efficient compared with query all the nodes in the manner of flooding in the prior art. Assuming the number of the clusters is N, the flooding of each category at most contains N peer nodes. Thus, a query request is only transmitted among the agent nodes related to its category overlay, the number of nodes relating to the query request is very small, and the query speed is fast. For example, a user wants to find files of music productions of singers of a country, the node related to the user may sends a request for querying "country" category, the query request includes a keyword list containing the names of the singers or the names of the songs, and the address of the node storing what matching with the query may be returned through the agent node.

The request node may also determine nodes for storing the segments of a certain file by using a category overlay search. For example, if the segment of the requested file is the Nth segment ($N^{th}$), the request node may determine the agent node which is associated with the Nth segment of the file, so as to send a query request to the agent node containing the Nth segment category, the agent node searches and returns one or more node lists storing the Nth segment of the requested file.

Through the embodiments in Figure 4- Figure 6, the structure of the service redirecting system in the embodiments of the present invention has been explained in detail. However, the following several points should be specified:

1. When a new cluster is created, the initial central node of the cluster is the agent node of all the categories of the new cluster. As other nodes participate in the new cluster, the central node may transfer some categories to other nodes, and these other nodes may further transfer the categories to another some nodes. For example, any agent node in a cluster may transfer some of its categories to nodes which are newly participated in and are sub nodes of the agent node. If the load of the agent node is heavy, some of the categories may be transferred to other nodes.

2. If the agent node in the cluster has transferred one or more categories to some other agent nodes, the category table maintained by the agent node of the cluster needs to be updated. At first, only the agent nodes from which the categories have been transferred and the nodes to which the categories are transferred have the newest information of the current agent nodes of the categories transferred. Periodically reporting may solve the problem that the category table needs to be updated. Each node participated in may periodically send a category updating report to one or more adjacent nodes which are selected optionally. The category updating report may include N newest messages (or category transferring report events), and entities of any M category tables. Once the category updating report is received, the reception node updates the category table based on a timestamp in the category updating report.

3. When a node shares information with the system, the suitable agent node may be determined by looking for the category which matches with the information in the category table, and thereby, the node carries out message communication with the agent node. The shared information may include a category, a keyword list associated with the information and so on, and may notify the agent node that the allocated category information may also be accessed by other nodes. Once the agent node receives the message of communication, the agent node may store a keyword list and store the address of the node in the content index table.

4. In some specific cases, the category and keyword may be selected by the node corresponding to the user. The user may select categories from a pre-defined category list, and may select multiple keywords describing the category content. The number of the keywords can be one or more than one.

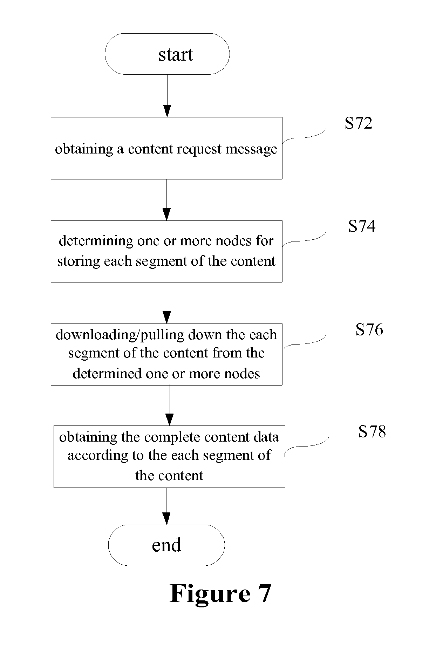

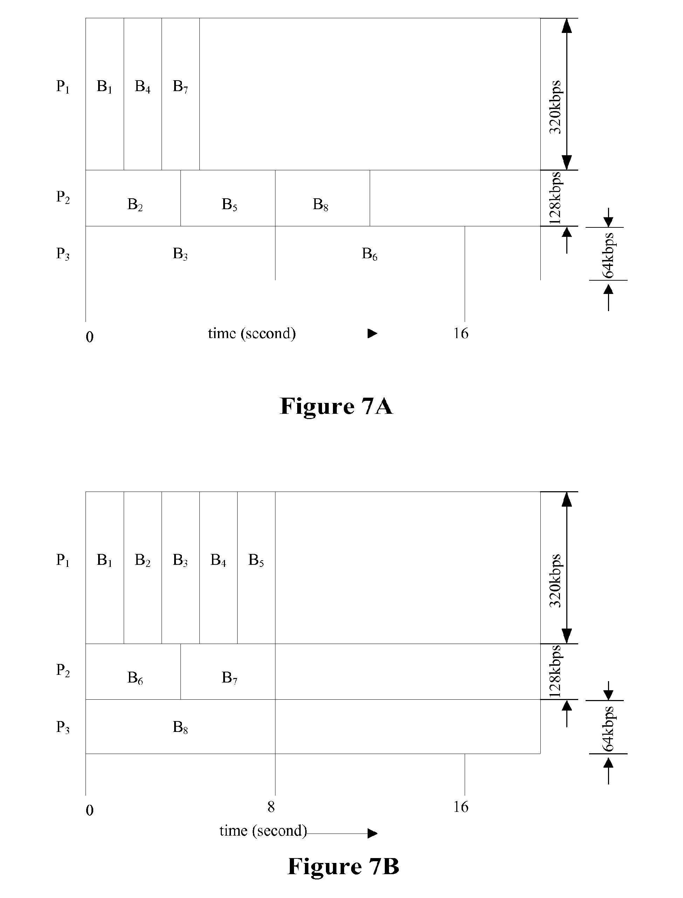

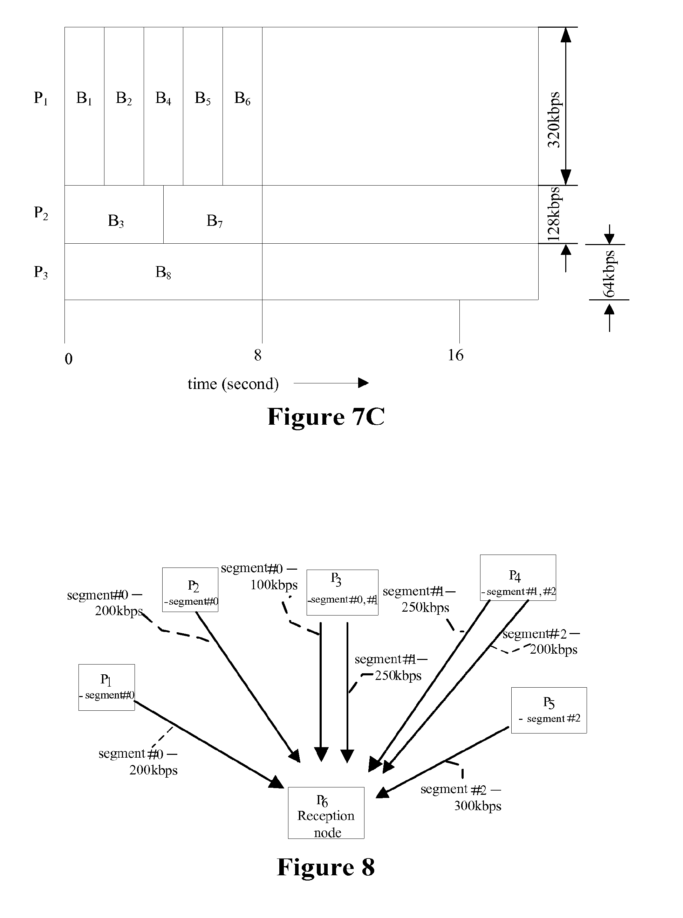

Figure 7 is a flow chart of a service redirecting method according to an embodiment of the present invention. As shown in Figure 7, the following processing procedure is included:

Step **S72:** obtaining a content request message, wherein the content request message is used to request downloading/pulling down content;

Step **S74:** determining one or more nodes for storing each segment of the content;

Step **S76:** downloading/pulling down the each segment of the content from the determined one or more nodes;

Step **S78:** obtaining the complete content data according to the each segment of the content.

To understand the present embodiment, the present embodiment may be explained in conjunction with the system embodiment. In the embodiment of Figure 7, according to a request message, such as an IPTV request, corresponding to a user obtaining a certain file content, one or more nodes for storing each segment of the content are determined from the central node, the regional central node, or the agent node, for example, the node storing the content and the address corresponding to the node are obtained from the content index table of the agent node, the request node sending the request message may download/pull down each segment of the content from the determined one or more nodes, and finally the complete content data is obtained according to the each segment of the content.

The service redirecting method of the present embodiment is used to provide downloading/pulling down media data. The present embodiment may be used as media content pulled down to the reception node, the media content may consist of several segments, and these segments are stored in the nodes of the network. According to the request message received, the nodes may search the nodes which store the content requested by the user, preferably, form the determined one or more nodes storing each segment of the content requested by the user into a node list, and download the content requested by the user from the node list.

Assuming that a segment contains N blocks {B1, B2, ..., BM}, and M nodes (shortened as storage node) are determined to store the segment, referred to as {P1, P2, ..., PM} which are used to provide segments, and assuming that the bandwidth of each storage node is {Bw1, Bw 2, ..., Bw M}, wherein the sum of the bandwidths should at least equal to Br (bit rate of video playing), the scheduling method solves how to download the segment from M storage nodes, such that there is less initial buffer time from each block of the segment to the reception node, and each block can be downloaded as early as possible.

Downloading/pulling down the each segment of the content from the determined one or more nodes (shortened as scheduling method in the present text) in Step S76 of the embodiment in Figure 7 may be realized in the following three ways:

(1) Assigning data blocks based on a round robin (RR) method

In the round robin method, the determined nodes (referred as storage nodes) for storing the segments are numbered as 1, 2,..., M. According to the order from 1 to M, data blocks are downloaded/pulled down from each storage node. The manner in which the data blocks are downloaded/pulled down using the round robin method treat all the storage nodes equally by allocating identical number of blocks for each storage node, no matter how much bandwidth each storage node may donate to stream media session.

Figure 7A is a schematic diagram of a distributing order for using a service redirecting method according to an embodiment of the present invention to realize downloading/pulling down data blocks based on around robin method. Figure 7A shows a specific embodiment of downloading/pulling down eight data blocks (B1-B8) with the same size from three storage nodes (P1-P3) using the RR method. Assuming that the playing speed Br is 512kbps, and each block contains video content with the playing time of 1 second, and assuming that the bandwidth of the storage node P1 is 320kbps (5/8 × Br), the bandwidth of P2 is 128kbps (1/4 × Br), the bandwidth of P3 is 64kbps (1/8 × Br), using the RR method, it needs to cost 16 seconds to download/pull down all the eight data blocks.

(2) Downloading/pulling down the data blocks based on Bandwidth Proportional (BP)

In the BP method, the number of the blocks allocated to each storage node is proportional to the bandwidth of the node. In the BP method, the storage node Pi is designated to download/pull down Bwi/Br data blocks, wherein Bwi is the bandwidth of the node i, and Br is the playing speed. The method of downloading/pulling down the data blocks using the BP method may make full use of the bandwidth of each storage node.

Figure 7B is a schematic diagram of a distributing order for using a service redirecting method according to an embodiment of the present invention to realize downloading/pulling down data blocks based on bandwidth. Figure 7B shows a specific embodiment of downloading/pulling down eight data blocks (B1-B8) with the same size from three storage nodes (P1-P3) using the BP method. Similar to Figure 7A, assuming that the playing speed Br is 512kbps, and each block contains video content with the playing time of 1 second, and assuming that the bandwidth of the storage node P1 is 320kbps (5/8 × Br), the bandwidth of P2 is 128kbps (1/4 × Br), the bandwidth of P3 is 64kbps (1/8 × Br), using the BP method, it needs to cost 8 seconds to download/pull down all the eight data blocks. The BP method may effectively use the bandwidth of each storage node. However, it can be seen from Figure 7B that the initial several data blocks are allocated to one node, only the bandwidth of one node is used to download/pull down the initial several data blocks. If the initial several data blocks are desired to be cached, it may take longer to cache these initial several data blocks than to download/pull down the initial several data blocks.

(3) Downloading/pulling down data blocks based on a multi-source method

The multi-source method is a method using Multi-Source Scheduling (MSS), this method combines the advantages of the RR and the BP, and the main process of the method is: the data blocks of one segment are allocated to a storage node in the manner of the RR, in each circulation, the number of the data blocks allocated to the node is proportional to the bandwidth of the node.

In the MSS method, the storage nodes may be classified according to the manner of the descending order of the bandwidth Bw. Assuming that the earliest time when a storage node Pi begins to send the current data block is Ti, if the storage node Pi has not sent the data blocks yet, the Ti is the current time; if the storage node has sent several data blocks, the Ti is the time when the storage node finishes the transmission of the data blocks. The initial value of Ti is set as 0.

The data blocks of the segment to be downloaded/pulled down are allocated to the storage node in the order in which the data blocks are numbered, and is started from the first data block $B_1$. To allocate a current data block $B_{current}$, the reception node may firstly calculate an estimation value of the time it takes to complete the downloading of the block from each storage node. Preferably, the estimation value of the completion time may be calculated through the following formula:

$$T_{finish\ (i)} = T_i + \frac{Size}{Bw_i} \qquad\qquad (3)$$

Wherein $T_{finish(i)}$ is the estimation value of the completion time of the storage node Pi, Size is the size of the current block $B_{current}$. According to the estimation value of the time at which the downloading of each storage node is completed, the storage node with the lowest estimation value of the completion time is determined, and the current block is allocated to that storage node with the lowest estimation value of the completion time. The downloading completion time of the selected storage node is set to be equal to $T_{finish\ (i)}$, the allocation process is repeated in the order of the current data blocks, until the last block of the current segment is allocated to the storage node.

The MSS method is to allocate the storage nodes providing blocks based on the estimation value of the completion time of the current block. The node with the lowest estimation value of the completion time delivers the current data block to a user terminal. The MSS method ensures that the allocated storage nodes are in a direct proportion to the bandwidth which can be provided by the storage nodes. After receiving the previous blocks, the reception node will download the next block as quick as possible.

Figure 7C is a schematic diagram of a distributing order for using a service redirecting method according to an embodiment of the present invention to realize downloading/pulling down data blocks based on a multi-source method. Figure 7C shows a specific embodiment of downloading/pulling down eight data blocks (B1-B8) with the same size from three storage nodes (P1-P3) using the MMS method. Similar to Figure 7A and Figure 7B, assuming that the playing speed Br is 512kbps, and each block contains video content with the playing time of 1 second, and assuming that the bandwidth of the storage node P1 is 320kbps (5/8 × Br), the bandwidth of P2 is 128kbps (1/4 × Br), the bandwidth of P3 is 64kbps (1/8 × Br), using the MSS method, it needs to cost 8 seconds to download/pull down all the eight data blocks.

The RR method, the BP method and the MSS method can be compared with each other through Figure 7A-Figure 7C. From Figure 7A-Figure 7C, it can be known that the delivery of eight blocks costs 16 seconds by using the RR method, while the delivery of the same blocks only costs eight seconds by using the BP method and the MSS method. The BP method and the MSS method are different in the time for completing the delivery of the initial several blocks. If the number of initial buffer blocks is three, it takes 8 seconds to finish the delivery of the 3 blocks by using the RR method. By comparison, it takes 4.8 seconds to finish the delivery of the 3 blocks by using the BP method, while it only takes 4 seconds to finish the delivery of the 3 blocks by using the MSS method. By comparing the three scheduling methods of RR, BP, and MSS in Figure 7A- Figure 7C, it is sufficiently explained that it is possible to take less time to download each block, and obtain less initial buffer time.

During the process of pulling down the first segment of a certain file, the reception node may pull down the second segment and the following segments simultaneously, until the complete file has been pulled down to the reception node.

In the above embodiment of the service redirecting method, when a node (a reception node) requests to download a certain content file in the system, the reception node determines a node list storing the initial segment of the content file through an agent node. When the reception node prepares to download/pull down other segments of the expected media content, the initial segment has been downloaded/pulled down from one or more nodes. The reception node may use the scheduling methods shown illustrated by Figure 7A- Figure 7C to calculate the bandwidth of the selected storage node, and begin to pull down the data content from the initial segment to the reception node in the scheduling method similar to the MSS.

In the situation that a certain content file requested by the reception node cannot be provided, a refused IPTV request message will be returned. Generally, the cases where a request is refused may be as follows:

1. No segment is found, or the content which is expected to be requested is not found at all;

2. The node storing the content does not have sufficient bandwidth to transmit media stream.

In the above embodiment of the service redirecting method, a method for searching Category Overlay is also provided. Performing service redirection by using the searching method can locate the media segment requested for an IPTV streaming session. The method for searching Category Overlay is used during a stream media session, and it is not necessary to finish downloading of all the segments requested before the media playing. Preferably, a segment of a video file may be further divided into multiple blocks, which is helpful to parallel reception of different parts of a segment which are from different storage nodes, and to the accumulation of up-link bandwidth from different storage nodes. During a stream media session, multiple storage nodes support an IPTV request, in order to efficiently use the up-link bandwidth accumulated by different storage nodes, the MSS method may be used to select the allocation order of each block of a segment and the storage nodes, and to coordinate downloading/pulling down of each storage node to ensure the service of one IPTV request in time.

Through the above embodiment, the method for searching Category Overlay may be used to the unstructured network based on P2P overlay of the P2P technology of the cluster, and the structure allows the separation between the flow produced by searching and the system maintenance. When category overlay search is performed, the number of the messages produced by performing the search may be limited, classified search may be performed according to category and cluster/region, and moreover, flow of index may be search through isolation.

In some cases, the content requested or searched currently may include Metadata. For example, the metadata may determine each segment of a video file corresponding to a certain scene. Moreover, the metadata may include relatively detailed information related to segment information content, so as to facilitate accurate determination of a specific segment. For example, for a video file, the segment in which a certain actor or actress is a lead actor may be determined through the metadata, which is helpful for the users' watching, and improves the experience of the users. The metadata allows intelligent search on content. In practical application, the metadata may be included in one or more initial segments of the content, such that the metadata may be obtained and used immediately by a playing device of a reception node. By searching the metadata, the segment of the expected scene beginning to play can be accurately determined, and the playing device may also be configured to play content, such that it can provide fast forwarding or turning back to a particular logical scene, subsequent location, caching, and playing from a determined segment.

Figure 8 is a schematic diagram of using a service redirecting method according to an embodiment of the present invention to realize a transmission of data to users using accumulated bandwidth. As shown in Figure 8, assuming that a reception node P6 wants to watch a video whose playing speed is 500kbps, in watching the video, the reception node P6 searches segment# 0 of the video, and finds that the nodes P1, P2 and P3 include the segment# 0, at this time, the reception node P6 may select P1, P2, P3 as the nodes providing the segment# 0, and calculate the bandwidth for pulling down the segment# 0 of P1, P2, P3. Similarly, segment# 1 is pulled down from P3, P4; and segment#2 is pulled down from P4, P5. After the streaming session ends, the reception node P6 may cache each segment pulled down in the storage space provided by the storage node, in this way, based on the segment stored, the reception node P6 may provide content service for other nodes.

Once the reception node produces a request for downloading media content segments, the reception node may send a scheduling command to the storage node which is selected to provide the media content service; when the storage node receives the scheduling command, the storage node may send blocks allocated during scheduling to the reception node (or user terminal).

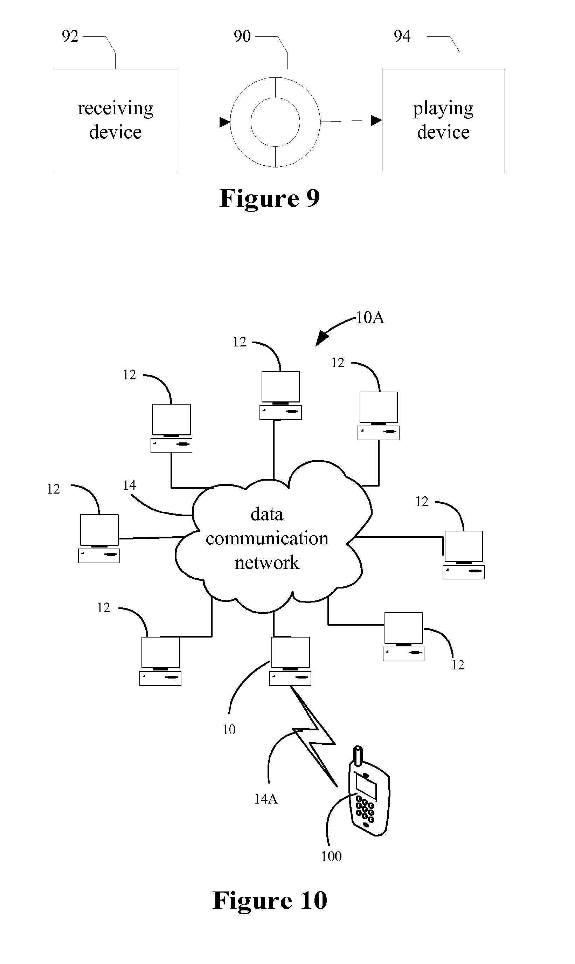

Figure 9 is a schematic diagram of using a service redirecting method according to an embodiment of the present invention to realize a transmission of data blocks to users using a round robin method. As shown in Figure 9, a reception node may maintain a circular cache **90.** Once a reception device **92** in the reception node receives a block from the storage node, the reception node may insert the block to a correct position in the circular cache **90,** and play the block through a playing device **94.** The size of the circular cache **90** may be expressed as $\alpha_{buff} \times N_{sche} \times blk\_Size$, wherein $\alpha_{buff}$ is a parameter and $\alpha_{buff} > 1$, $N_{sche}$ represents the number of the data blocks scheduled, and blk_Size represents the size of a data block.

In order to be adaptive to delay of a stream media package or a certain node's departure from the system or a fault, before playing a media file, the reception node should at least be able to cache $S_{initBuff}$ (initial cache) blocks. After initial cache time, the reception node may continually read media data from the circular cache **90** and play the media file.

Preferably, during a streaming session, the reception node may monitor the state of the circular cache **90,** and track the received blocks. Before the received blocks are scheduled to be played, each block at least receives certain set time (referred to as $T_{adv}$ seconds). If the block fails to receive the set time, the block may be determined as "lost". Thus, the reception node may to the corresponding nodes a request for re-transmitting the lost blocks, which ensures the quality and the accuracy of transmission.

During a streaming session of the process of performing the service redirecting method of the above embodiment, in cases where a certain node leaves the service redirecting system, or a fault occurs, or a rate of a stream input from one or more nodes becomes slower due to network congestion, an alternative node of the node may be selected. Specifically, the minimum value of a reception rate may be preset, for one or more nodes (which may also be shortened as failure nodes) whose reception rate is smaller than the minimum value or one or more nodes (which may also be shortened as failure nodes) which leave the system, the alternative nodes may be selected for them, and the segments and/or the blocks stored in the failure nodes are downloaded/pulled down from the selected alternative nodes. For example, the reception node may select one or more alternative nodes from the nodes of the requested segment.

In specific implementation, if a certain node malfunctions or leaves the system during a stream media session, the reception node may select another node to replace the node that has left the system or has malfunctioned. The reception node may produce a stream delivery scheduling formed by new nodes which haven't received a block. The reception node sends a modified scheduling (that is, from which nodes the currently received blocks are received) to the alternative nodes. Once the alternative new nodes selected receive the modified scheduling, the new nodes may send the allocated blocks to the reception node according to the order instructed in the scheduling. In order to simplify the description, the process may be referred to as "provider switching". During the streaming session, the reception node (or the user terminal) may monitor the rate of the content received from each storage node. If the reception node detects that the rate of the media stream which is being output from a certain storage node has decreased for some time, or if it has been reported or detected that the storage node leaves the system or malfunctions, the reception node may perform the above provider switching processing.

Preferably, considering that, when the provider switching occurs to the reception node, there may be cases where the total bandwidth is less than the required playing rate, and the cache of the reception node is empty, in setting $S_{iniBuff}$ (initial cache), the initial cache may be selected to be sufficiently large, such that the playing can be continued without interruption even if the phenomenon of the provider switching happens.

The methods and systems provided by the above each embodiment of the present invention support to search shared information in a relatively large scope of nodes. The function of service redirecting can be distributed in many nodes, the maximum number of the nodes can reach the degree of the product of the number of categories and the number of the clusters in the system. For the maintenance of the system, for example, content index, automatically combining new nodes or processing leaving of nodes, may also be performed in many nodes separately.

The service redirecting method of the embodiment of the present invention can use a case where the up-link bandwidth of the node in the network is smaller than the downlink bandwidth (e.g. ADSL). For example, the rate of a single node uploading data is relatively low, while the rate of pulling down/downloading data from multiple nodes to the reception node is relatively high.

The content distributing method and the service redirecting method provided by the above each embodiment of the present invention may extend the IPTV system, and can be used in devices besides the system. For example, the content may be delivered to a Personal Digital Assistant (PDA), a mobile phone and so on, specifically, it can be realized by using proxy nodes as the reception nodes, after the proxy nodes download/pull down the content from system nodes, the proxy nodes themselves can play the content and may also forward the content downloaded to other device (e.g. mobile phone).

Figure 10 is a schematic diagram of an extended structure of an IPTV system applying a service redirecting system according to an embodiment of the present invention to P2P technology. Figure 10 shows a system **10A** which contains a proxy node **10.** The proxy node **10** receives content data by communicating with other node **12,** through a communication link **14A,** the proxy node **10** also communicates with a node **100** which does not participate in the system **10A,** the communication link **14A** may include a wireless connection. The proxy node **10** interacts with the other parts of the system **10A,** and forwards the received content data to the node **100** through the communication link **14A.** As shown in Figure 10, the node **100** specifically can be a commonly used mobile phone. A mobile phone user can search videos in the system **10A,** and then plays the videos on the mobile phone. In some specific cases, the rate of the content data may be decreased by performing transcoding at the proxy node **10,** so as to be adaptive to the node **100** and/or the communication link **14A.** Regarding the specific performing of the service redirecting and content distributing, reference can be made to relevant explanations of the embodiments in Figure 1- Figure 9, and no repeated description about the identical or similar content is given here.

The IPTV system in the above system embodiment is convenient to extend, and can provide a better load balance among the nodes. In the system embodiment, a "super node" capable of independently handling all the searching services of the system may not be set.

In the above system embodiment, the association can be carried out in two ways: on one hand, the node is associated to the cluster, for example, maintenance tasks such as determining which node is the proxy node of which cluster may be associated by using the topology structure of the cluster; on the other hand, the agent nodes are associated in the category overlay, for example, a searching task of the service redirecting node may be managed by using a corresponding category overlay topology.

In conclusion, in the content distributing method, the service redirecting method and system, and the node device provided by each embodiment of the present invention, the content is divided into several segments, and distributed to multiple different storage nodes, the requests of the users may be responded from multiple nodes separately, the extensibility of the IPTV system can be effectively improved, the functions such as IPTV media service directing are completed. Each of the above embodiments may also provide effective keyword with a large scale to search services based on a P2P network model, which effectively shortens the time for service redirecting.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

**Claims**

1. A content distributing method, applicable to an IPTV system, **characterized by**, comprising:

    dividing content to be distributed into multiple segments;
    determining for each segment one or more nodes for storing the segment;
    distributing the segment to the one or more nodes for storing the segment.

2. The method according to Claim 1, **characterized in that** the operation of dividing content to be distributed into multiple segments particularly comprises:

    dividing the content to be distributed into multiple identical or different segments with each segment containing multiple blocks whose size is adjustable and/or configurable.

3. The method according to Claim 1, **characterized in that** the one or more nodes for storing the segment are determined by at least one of the following node information:

    available bandwidth of the node, stability of the node, available storage space of the node, and utilization frequency of the node.

4. The method according to Claim 3, **characterized in that** the method further comprises:

    periodically acquiring a report message transmitted by a node, with the report message carrying the node information.

5. The method according to any of Claims 1-4, **characterized in that** the nodes for storing the segment are determined according to the following information:

$$G^{St}_i = \alpha_{St} \times \frac{\text{EstimatedStay}_i(\text{new})}{\max_{1 \le i \le m} \{\text{EstimatedStay}_i(\text{new})\}} + \beta_{St} \times \frac{Bw_i \times (1 - R_i^{\text{usage}})}{\max_{1 \le i \le m} \{Bw_i \times (1 - R_i^{usage})\}} -$$

$$\gamma_{St} \times \frac{Freq_i^{serve}}{\max_{1 \le i \le m} \{Freq_i^{serve}\}} ,$$

wherein $G^{St}_i$ represents a goodness measure of node i,

$$\text{EstimatedStay}_i(\text{new}) = \alpha \times \text{EstimatedStay}_i(\text{prev}) + \beta \times \text{CurrentStay}_i;$$

EstimatedStay$_i$(new) represents stability of the node, CurrentStay$_i$ is a time-period length of a non-barrier duration or a duration of the node i participating in the system, EstimatedStay$_i$(prev) is a historical value of EstimatedStay$_i$, $\alpha$ and $\beta$ are weight factors, and $\alpha + \beta = 1$; Bw$_i$ is the available bandwidth for the node i; R$_i^{usage}$ is an average utilization of a bandwidth donated by the node i participating in the system, Fre$^{serve}_i$ is frequency at which the node i processes IPTV requests within a predetermined period;
wherein $\alpha_{St}$, $\beta_{St}$, $\gamma_{St}$ are weight factors, and m is the number of nodes participating in the IPTV system.

**6.** The method according to Claim 5, **characterized in that** the operation for determining one or more nodes for storing the segment particularly comprises:

obtaining a goodness measure $G^{st}$ corresponding to each node; and
selecting goodness measures which are greater than or not less than a preset value, and setting nodes corresponding to the goodness measures which are greater than the preset value as the nodes for storing the segment.

**7.** The method according to Claim 6, **characterized in that** the operation of distributing the segment to the one or more nodes for storing the segment is performed in the following way:

distributing the segment to one or more nodes respectively, according to the goodness measures of one or more nodes determined for storing the segment.

**8.** A service redirecting method, **characterized by** comprising:

acquiring a content request message, wherein the content request message is used to request downloading/pulling down content;
determining one or more nodes for storing individual segments of the content;
downloading/pulling down individual segments of the content from the one or more nodes; and
obtaining complete content according to the individual segments of the content.

**9.** The method according to Claim 8, **characterized by**, after the operation of determining one or more nodes for storing individual segments of the content, further comprising:

adding node identifiers of the determined one or more nodes to a node list downloading/pulling down the content.

**10.** The method according to Claim 8, **characterized by**, after the operation of determining one or more nodes for storing individual segments of the content, further comprising:

assigning downloading/pulling-down data blocks to the one or more nodes, which can be particularly performed through at least one of the following manners:

according to the order of the nodes, circularly downloading/pulling down the segments or one /more blocks in the segment from the one or more nodes, wherein the segments or the blocks assigned to each node in each cycle are identical, or the segments or the blocks assigned are in proportion to the bandwidth of the node;
downloading/pulling down each of the segments or one/more blocks in the segments from the one or more nodes, according to the bandwidth of the one or more nodes for storing the segment.

**11.** The method according to Claim 8, **characterized in that** the operation of downloading/pulling down individual segments of the content from the one or more nodes is carried out through at least one of the following manners:

downloading/pulling down individual segments of the content by accumulating the bandwidth;
writing into a preset circular cache the individual segments of the content downloaded/pulled down with the circular cache preset with corresponding locations of the individual segments and/or one or more blocks of the individual segments, wherein the each segment contains multiple blocks whose size is adjustable and/or configurable.

**12.** The method according to any of Claims 8-11, **characterized by**, further comprising:

selecting alternative nodes for one or more failure nodes whose receiving rate is less than a preset value, and downloading/pulling down from the alternative nodes the segments and/or blocks stored in corresponding failure nodes.

**13.** A service redirecting system, **characterized by**, comprising one or more clusters with each of the clusters including:

a central node, configured to store all content to be distributed, and to distribute the content;
one or more subordinate nodes with a hierarchical structure, directly connected to the central node or connected to an upper-level node of the subordinate node, configured to store individual segments of the content distributed by the system, to determine one or more nodes of a downloaded/pulled-down content upon receiving a request message corresponding to downloaded/pulled-down content, and to download/pull down the individual segments of the content from the one or more nodes determined.

**14.** The system according to Claim 13, **characterized in that** the central node and the subordinate nodes form a tree-type topology structure or a netty topology structure.

**15.** The system according to Claim 13 or 14, **characterized in that** each of the nodes comprises:

a category table, configured to store a mapping relation between individual categories and agent nodes of a cluster to which the category pertains, wherein the category is directory information which classifies all the content, and the agent nodes are used to maintain and manage nodes containing one or more kinds of directory content in the categories;
a storage module, configured to store segments of the content locally stored; and
a link module, configured to store links to other nodes.

**16.** The system according to Claim 15, **characterized in that** the nodes are agent nodes, the system further comprises:

a content index table, configured to maintain nodes for storing content, and address information corresponding to the nodes;
an overlay link table, configured to store address information of one or more agent nodes having an identical category in other clusters, wherein the category is directory information which classifies all the content.

**17.** A node device, **characterized by** comprising:

a category table, configured to store a mapping relation between the individual categories and agent nodes of a cluster to which the category pertains, wherein the category is directory information which classifies all the content, and the agent nodes are used to maintain and manage nodes containing one or more kinds of directory content in the categories;
a storage module, configured to store segments of the content locally stored; and
a link module, configured to store links to other nodes.

**18.** The node device according to Claim 17, **characterized by** further comprising:

a content index table, configured to maintain nodes for storing content, and address information corresponding to the nodes;
an overlay link table, configured to store address information of one or more agent nodes having an identical category in other clusters, wherein the category is directory information which classifies all the content.

**19.** The node device according to Claim 17 or 18, **characterized in that** the link module comprises:

a parent link sub module, configured to store a link to an upper-level node; and
a sub link sub module, configured to store a link to a lower-level node.

**Figure 1**

network     14

12A

link table

16A     16 F

network interface    data processor    category table

16B     16D

data storage device     playing device

16C     16E

**Figure 2**

start

dividing content to be distributed into multiple segments $\quad$ S32

determining for each segment one or more nodes for storing the individual segments $\quad$ S34

distributing the segment to one or more nodes for storing the segment $\quad$ S36

end

**Figure 3**

31

31B $\qquad$ 31A

**Figure 3A**

central node — 42

43 — regional central node | regional central node | regional central node — 43

edge node — 44 | edge node — 44 | regional central node — 43-1 | edge node — 44

edge node — 44

**Figure 4**

**Figure 5**

**Figure 6**

start

obtaining a content request message — S72

determining one or more nodes for storing each segment of the content — S74

downloading/pulling down the each segment of the content from the determined one or more nodes — S76

obtaining the complete content data according to the each segment of the content — S78

end

**Figure 7**

**Figure 7A**

**Figure 7B**

**Figure 7C**

**Figure 8**

92 — 90 — 94 —

receiving device → ○ → playing device

**Figure 9**

—10A

12

12

12

14

data communication network

12

12

12

12

10

14A

100

**Figure 10**

| INTERNATIONAL SEARCH REPORT | International application No. |
|---|---|
| | PCT/CN2008/073616 |

**A. CLASSIFICATION OF SUBJECT MATTER**

H04L29/08(2006.01)i

According to International Patent Classification (IPC) or to both national classification and IPC

**B. FIELDS SEARCHED**

Minimum documentation searched (classification system followed by classification symbols)  IPC: H04L, G06F15/16

Documentation searched other than minimum documentation to the extent that such documents are included in the fields searched

Electronic data base consulted during the international search (name of data base and, where practicable, search terms used)

WPI, EPODOC, PAJ, CNPAT, CNKI:

IPTV, content, distribut+, deliver+, server, segment, section, piece, stream+, node, peer, P2P, client, link

**C. DOCUMENTS CONSIDERED TO BE RELEVANT**

| Category* | Citation of document, with indication, where appropriate, of the relevant passages | Relevant to claim No. |
|---|---|---|
| X | US2003204602A1 (Michael D. Hudson et al.) 30 Oct. 2003(30.10.2003) | 1-4, 8-19 |
| | Description, paragraphs[0028]-[0032], [0045]-[0047], [0056]-[0068], [0077], figures 3, 4 | |
| A | As above, the whole document | 5-7 |
| X | US2006224760A1(1000 OAKS HU LIAN TECHNOLOGY DEV CO., LTD.) | 1, 2, 8, 13, 14 |
| | 05Oct. 2006(05.10.2006) description, paragraphs [0017]-[0027], figures 1-3 | |
| A | As above, the whole document | 3-7, 9-12, 15-19 |
| A | CN101136911A(TENCENT SCI & TECHNOLOGY SHENZHEN CO., LTD.) | 1-19 |
| | 05 Mar. 2008(05.03.2008) The whole document | |
| A | CN101155019A(TENCENT SCI & TECHNOLOGY SHENZHEN CO., LTD.) | 1-19 |
| | 02 Apr. 2008(02.04.2008) The whole document | |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 Mar. 2009(18.03.2009) | **02 Apr. 2009 (02.04.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **BIAN Xiaofei** Telephone No. (86-10)62411330 |

Form PCT/ISA/210 (second sheet) (April 2007)

**INTERNATIONAL SEARCH REPORT**
Information on patent family members

| | International application No. |
|---|---|
| | PCT/CN2008/073616 |

| Patent Documents referred in the Report | Publication Date | Patent Family | Publication Date |
|---|---|---|---|
| US2003204602A1 | 30.10.2003 | US2003204613A1 | 30.10.2003 |
| | | US2003204605A1 | 30.10.2003 |
| | | US2009049185A1 | 19.02.2009 |
| US2006224760A1 | 05.10.2006 | US2006212584A1 | 21.09.2006 |
| | | US2006212595A1 | 21.09.2006 |
| | | US2006212542A1 | 21.09.2006 |
| | | US2006212347A1 | 21.09.2006 |
| | | US2006224756A1 | 05.10.2006 |
| | | US2006224759A1 | 05.10.2006 |
| | | US2006224758A1 | 05.10.2006 |
| | | US2006224757A1 | 05.10.2006 |
| | | US2006230107A1 | 12.10.2006 |
| CN101136911A | 05.03.2008 | WO2008025297A1 | 06.03.2008 |
| CN101155019A | 02.04.2008 | None | |

Form PCT/ISA/210 (patent family annex) (April 2007)